**Europäisches Patentamt**

**European Patent Office**

**Office européen des brevets**

(19)

(11) Veröffentlichungsnummer: **0 276 415 B1**

(12)

# EUROPÄISCHE PATENTSCHRIFT

(45) Veröffentlichungstag der Patentschrift:
28.11.90

(51) Int. Cl.⁵: **B62D 65/00**

(21) Anmeldenummer: 87117940.4

(22) Anmeldetag: 04.12.87

(54) Vorrichtung zum Transport und Montage einer Motorhaube.

(30) Priorität: 29.01.87 DE 3702618

(43) Veröffentlichungstag der Anmeldung:
03.08.88 Patentblatt 88/31

(45) Bekanntmachung des Hinweises auf die Patenterteilung:
28.11.90 Patentblatt 90/48

(84) Benannte Vertragsstaaten:
DE FR GB IT SE

(56) Entgegenhaltungen:
US-A- 4 167 996

(73) Patentinhaber: Adam Opel Aktiengesellschaft,
Bahnhofsplatz 1 Postfach 17 10,
D-6090 Rüsselsheim(DE)

(72) Erfinder: **Kless, Dietmar, Friedensstrasse 19 a,
D-6501 Schwabenheim(DE)**
Erfinder: **Müller, Hans-Dieter, Ing. (grad.),
Liebfrauenstrasse 95, D-6096 Raunheim(DE)**

(74) Vertreter: **Rosenfeld, Jürgen, Dipl. Ing. et al, Adam Opel
Ag Patentabteilung Bahnhofsplatz 1 Postfach 17 10,
D-6090 Rüsselsheim(DE)**

ACTORUM AG

## Beschreibung

Die Erfindung bezieht sich auf eine Vorrichtung zum Transport und zur Montage und Demontage einer Motorhaube eines Kraftfahrzeuges.

Bei der Montage eines Kraftfahrzeuges ist es bislang gebräuchlich, daß die unlackierte Motorhaube von zwei Arbeitern von Hand einem Transportwagen entnommen, dann zum Fahrzeug getragen und dort mittels einer kleinen Hilfslehre eingebaut wird. Aus Gründen einer rationellen Fertigung hat man in jüngster Zeit die sogenannte Cockpitmontage entwickelt, bei der bei der Montage des Kraftfahrzeugs eine aus der Stirnwand und der Armaturentafel mit allen Einbauteilen bestehende Baueinheit von oben her in die Karosserie eingesetzt wird. Dabei muß die zum Zwecke der Lackierung zuvor eingebaute Motorhaube zunächst wieder demontiert und dann erneut eingebaut werden. Das bedingt beträchtlichen Montageaufwand, wenn die Motorhaube hierbei von Hand gehandhabt werden muß. Die hierbei erforderlichen Bewegungen sind arbeitsphysiologisch ungünstig, da die Motorhauben relativ schwer sind und weit angehoben werden müssen. Sehr leicht kommt es bei dieser Tätigkeit auch zu einer Lackbeschädigung.

Der Erfindung liegt die Aufgabe zugrunde, eine Vorrichtung zum Transport und zur Montage und Demontage einer Motorhaube eines Kraftfahrzeuges zu entwickeln, mit der Motorhauben besonders rasch und mit möglichst geringem Arbeitsaufwand montiert werden können.

Diese Aufgabe wird erfindungsgemäß dadurch gelöst, daß die Vorrichtung einen an zumindest einem Schwenkarm angelenkten Halterahmen zur Aufnahme der Motorhaube hat, daß das andere Ende des Schwenkarmes schwenkbar an einem Deckenförderer gelagert ist und daß der Schwenkarm mit zwei Gewichtsausgleichseinrichtungen versehen ist, von denen eine eine ständige Verbindung mit dem Schwenkarm hat und die andere mittels einer Kuppeleinrichtung mit dem Schwenkarm verbindbar ist.

Durch diese Gestaltung ist der Schwenkarm mit dem unbelasteten Halterahmen durch die fest mit ihm verbundene Gewichtsausgleichseinrichtung gewichtsausgeglichen, so daß er in jeder Zwischenstellung stehenzubleiben vermag. Wird im Halterahmen eine Motorhaube gespannt und dieser dadurch durch das Gewicht der Motorhaube belastet, so kann man die zweite Gewichtsausgleichseinrichtung mit dem Schwenkarm kuppeln und dadurch auch für einen Gewichtsausgleich der Motorhaube sorgen. Auf diese Weise ist auch beim Halten einer Motorhaube mittels der Vorrichtung sichergestellt, daß sich diese nicht selbsttätig nach oben oder unten bewegt. Ein weiterer Vorteil der erfindungsgemäßen Vorrichtung liegt darin, daß sie unverändert sowohl zur Haubendemontage als auch zur Motorhaubenmontage benutzt werden kann. Durch kleine Änderungen kann die Vorrichtung universell eingesetzt werden.

Die Gewichtsausgleichseinrichtung könnte mit über Seilzügen anhebbaren Gewichten arbeiten. Besonders einfach ist sie jedoch gestaltet, wenn sie durch Gasdruckfedern gebildet ist.

Die Kuppeleinrichtung zeichnet sich vorteilhafterweise dadurch aus, daß sie durch ein an einem Teil der Gasdruckfeder befestigtes Druckstück gebildet ist, welches zum Gewichtsausgleich gegen einen Hebelarm des Schwenkarmes anliegt und mittels der Kuppeleinrichtung in einer sich bei ausgeschwenktem Schwenkarm ergebenden Endstellung blockierbar ist. Durch diese Gestaltung kann man die Gewichtsausgleichseinrichtung für das Gewicht der Motorhaube beim Greifen einer Motorhaube zum Zwecke ihrer Demontage oder bei Freigeben der Motorhaube bei ihrer Montage einfach ein- oder auskuppeln, so daß die Vorrichtung mit oder ohne Motorhaube jeweils gewichtsausgeglichen ist.

Konstruktiv besonders einfach gestaltet sich die Kuppeleinrichtung, wenn das Druckstück zwischen zwei Leisten in einer Geradführung verschieblich angeordnet ist.

Das Druckstück rastet selbsttätig in der untersten Stellung des Schwenkarmes aus, wenn die Geradführung zum Blockieren des Druckstückes eine Rastmulde aufweist.

Das Einkuppeln der Gewichtsausgleichseinrichtung kann auf sehr einfache Weise geschehen, wenn im Bereich der Rastmulde unterhalb des Druckstückes ein Schwenkhebel zum Herausheben des Druckstückes aus der Rastmulde vorgesehen ist.

Dieser Schwenkhebel ist sehr einfach gestaltet und anzuordnen, wenn er ein zweiarmiger Hebel ist, welcher an seinem kürzeren Hebelarm unterhalb des Druckstückes einen gegen das Druckstück bewegbaren Stößel zum Anheben des Druckstückes hat.

Eine ausreichend große Verwindungssteifigkeit läßt sich dadurch erreichen, daß insgesamt zwei zu einem Rahmen zusammengefaßte Schwenkarme vorgesehen sind.

Vorteilhaft ist es auch, wenn die Schwenkarme mittels einer gemeinsamen Achse an einem Grundrahmen schwenkbar gelagert sind, welcher an zwei auf einer Deckenschiene verfahrbaren Förderwagen befestigt ist. Eine solche Konstruktion ist insgesamt einfach im Aufbau und eignet sich sehr gut für die Fließbandfertigung moderner Personenkraftwagen.

Die Schwenkarme können gegen ein unbeabsichtigtes Absenken durch zum Beispiel Erschütterungen beim Fahren entlang der Deckenschiene dadurch gesichert werden, daß sie durch zwei manuell betätigbare Doppelraster in hochgeschwenkter Stellung arretierbar sind.

Die Erfindung läßt zahlreiche Ausführungsformen zu. Eine davon ist in der Zeichnung dargestellt und wird nachfolgend beschrieben. In ihr zeigen die

Fig. 1 eine Seitenansicht der erfindungsgemäßen Vorrichtung oberhalb eines vorderen Bereiches einer Karosserie eines Kraftfahrzeugs,

Fig. 2 eine Vorderansicht der Anordnung gemäß Figur 1,

Fig. 3 einen Schnitt entlang der Linie III - III in Fi-

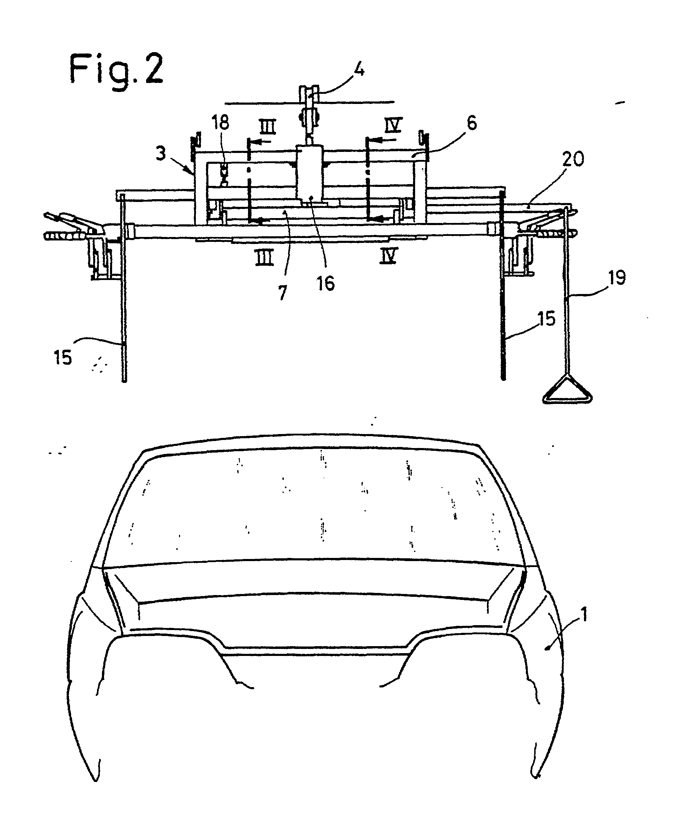

gur 2 im gegenüber der Figur 2 stark vergrößerten Maßstab,

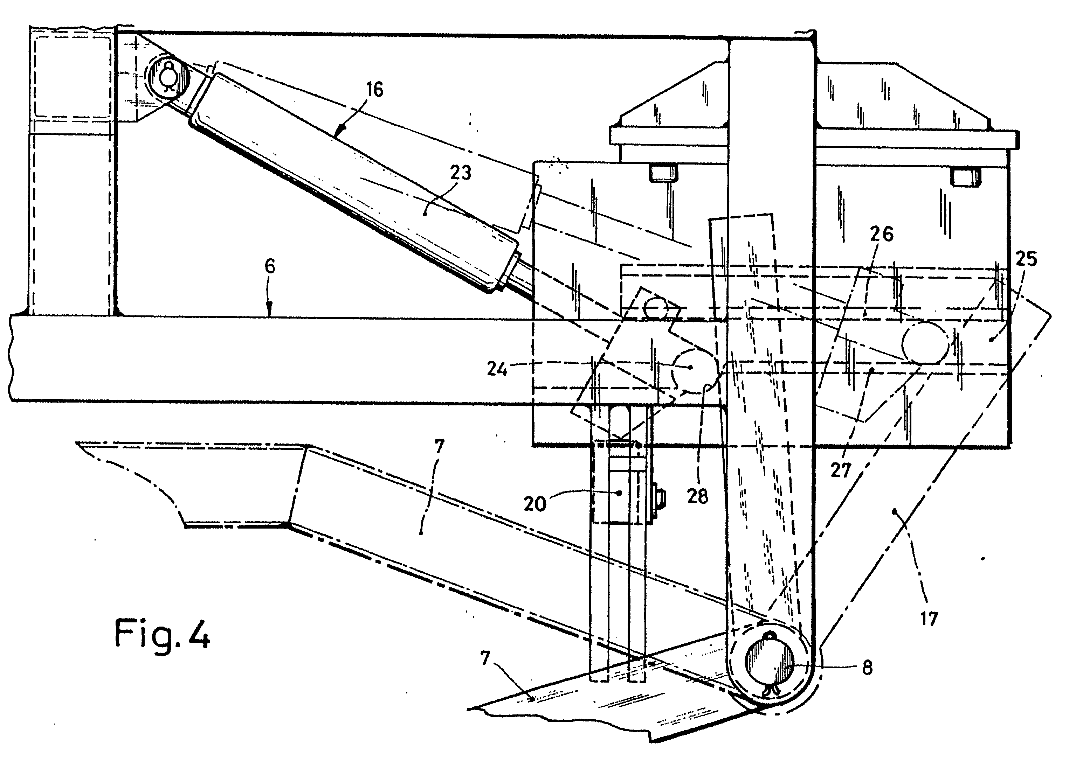

Fig. 4 einen Schnitt entlang der Linie IV - IV in Figur 2 im gegenüber der Figur 2 stark vergrößerten Maßstab,

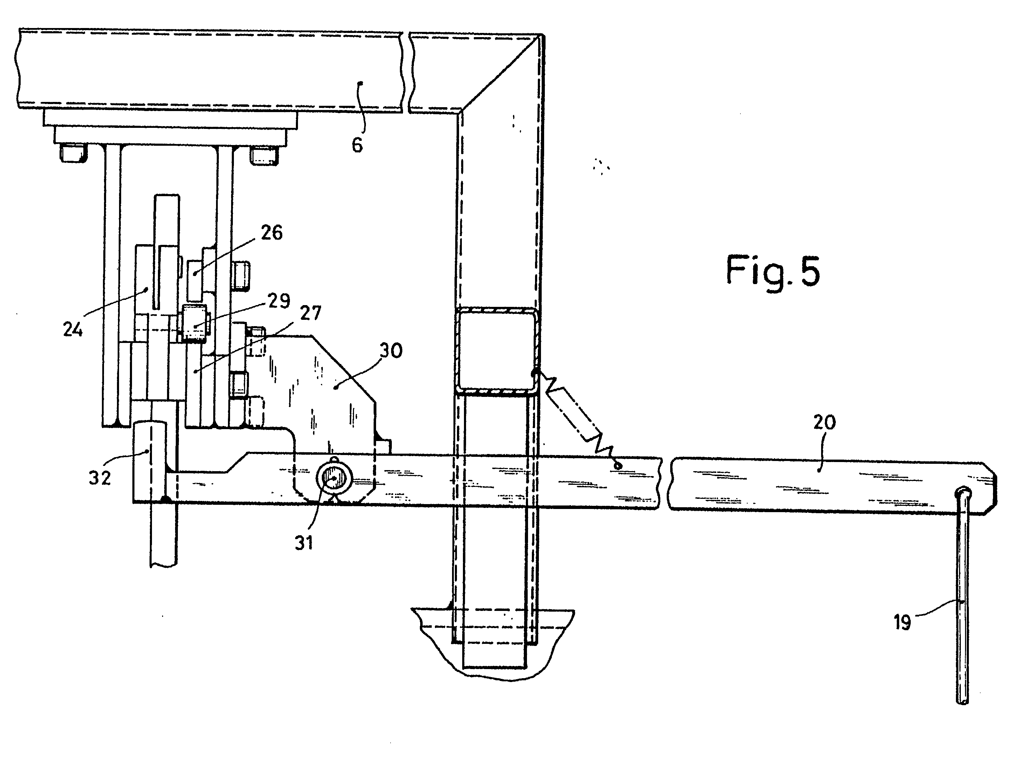

Fig. 5 eine Seitenansicht eines Hebels zum Betätigen der Vorrichtung.

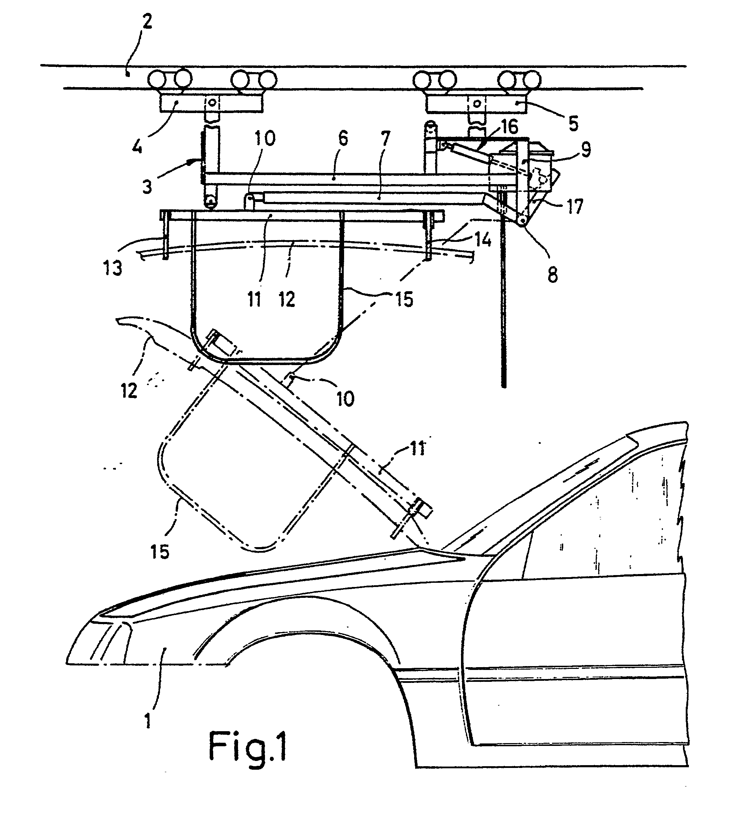

Die Figur 1 zeigt oberhalb einer Kraftfahrzeugkarosserie 1 eine Deckenschiene 2, auf der ein Deckenförderer 3 verfahrbar angeordnet ist. Dieser Deckenförderer 3 hat zwei Förderwagen 4, 5, welche gemeinsam einen rechteckigen Grundrahmen 6 tragen. An diesem Grundrahmen 6 sind zwei Schwenkarme gelagert, von denen in Figur 1 ein Schwenkarm 7 zu sehen ist. Dieser Schwenkarm 7 ist gemeinsam mit dem nicht zu sehenden Schwenkarm auf einer Achse 8 angeordnet, welche in einem nach unten gerichteten Träger 9 gehalten ist. Am freien Ende der Schwenkarme 7 lagert dieser mittels einer Achse 10 schwenkbar einen Halterahmen 11, welcher zum Halten einer strichpunktiert dargestellten Motorhaube 12 mittels Spannern 13, 14 ausgebildet ist.

Die Schwenkarme 7 lassen sich aus ihrer oberen, in durchgezogenen Linien gezeigten Stellung um die Achse 8 nach unten in die strichpunktiert dargestellte Stellung schwenken. Da der Halterahmen 11 um die Achse 10 schwenkbar ist, kann er in die Stellung einer geöffneten Motorhaube gebracht werden, um diese in Einbaulage zu bringen oder ausbauen zu können. Zum Bewegen des Halterahmens 11 dienen u-förmige Griffbügel 15 an beiden Seiten des Halterahmens 11.

Zu erkennen ist in der Figur 1 weiterhin eine Gewichtsausgleichseinrichtung 16, welche gegen einen schräg nach oben gerichteten Hebelarm 17 des Schwenkarmes 7 drückt.

Die Figur 2 zeigt, daß zusätzlich zur Gewichtsausgleichseinrichtung 16 eine weitere Gewichtsausgleichseinrichtung 18 vorgesehen ist, welche ebenfalls gegen den Schwenkarm 7 anliegt. Diese beiden Gewichtsausgleichseinrichtungen 16, 18 sind so gestaltet, daß die Gewichtsausgleichseinrichtung 18 ständig mit dem Schwenkarm 7 verbunden ist, während die Gewichtsausgleichseinrichtung 16 nur bei mit einer Motorhaube 12 belasteter Vorrichtung mit ihr in Wirkverbindung steht. Dieses Einkuppeln der Gewichtsausgleichseinrichtung 16 erfolgt mittels eines Zugseiles 19 und eines zweiarmigen Schwenkhebels 20.

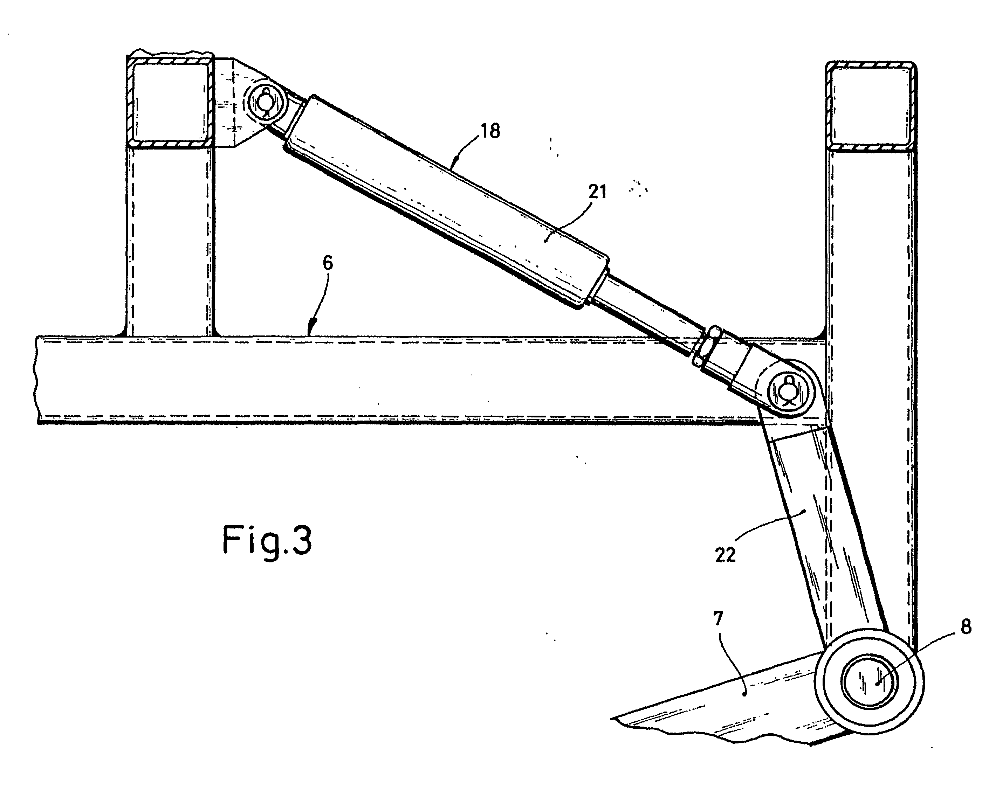

Die Figur 3 zeigt, daß es sich bei der Gewichtsausgleichseinrichtung 18 um eine Gasdruckfeder 21 handelt, welche einerseits am Grundrahmen 6, andererseits an einem Hebelarm 22 des Schwenkarmes 7 angelenkt ist. Die Druckkraft der Gasdruckfeder 21 ist so bemessen, daß das Gewicht der Schwenkarme 7 und des an ihm angeordneten Halterahmens 11 ausgeglichen wird.

Wie die Figur 4 zeigt, ist auch die Gewichtsausgleichseinrichtung 16 als Gasdruckfeder 23 ausgebildet, die mit einem Ende am Grundrahmen 6 angelenkt ist. Ihr anderes Ende ist mit einem Druckstück 24 verbunden, welches in einer Geradführung 25 zwischen zwei fest am Grundrahmen 6 angebrachten Leisten 26, 27 verschieblich gehalten ist. In der dargestellten Stellung, in der die Schwenkarme 7 heruntergeschwenkt sind, liegt das Druckstück 24 in einer Rastmulde 28 der unteren Leiste 27. Deshalb vermag es nicht gegen den Hebelarm 17 des Schwenkarmes 7 zu drücken.

Wird das Druckstück 24 mittels des Schwenkhebels 20 aus dieser Rastmulde 28 herausgehoben, so vermag es sich in der Geradführung 25 zu verschieben und dadurch den Hebelarm 17 im Uhrzeigersinn zu verschwenken, so daß eine aufwärts gerichtete Kraft auf den Schwenkarm 7 ausgeübt wird, was zum Ausgleich des Gewichtes einer vom Halterahmen 11 gehaltenen Motorhaube 12 dient.

Die Figur 5 zeigt, wie das Druckstück 24 mittels einer Rolle 29 zwischen den Leisten 26, 27 geführt ist. Weiterhin ist der zweiarmige Schwenkhebel 20 mit dem Zugseil 19 zu sehen. Dieser Schwenkhebel 20 ist an einem Arm 30 um eine Achse 31 schwenkbar gelagert und hat an seinem dem Zugseil 19 gegenüberliegenden Ende einen Stößel 32, der bei einer Schwenkung des Schwenkhebels 20 im Uhrzeigersinn das Druckstück 24 aus der in Figur 4 gezeigten Rastmulde 28 zu heben vermag, so daß es in die Geradführung 25 gelangt und dadurch gegen den Hebelarm 17 drücken kann, um das zusätzliche Gewicht einer Motorhaube ausgleichen zu können.

**Patentansprüche**

1. Vorrichtung zum Transport und zur Montage und Demontage einer Motorhaube eines Kraftfahrzeuges, dadurch gekennzeichnet, daß die Vorrichtung einen an zumindest einen Schwenkarm (7) angelenkten Halterahmen (11) zur Aufnahme der Motorhaube (12) hat, daß das andere Ende des Schwenkarmes (7) schwenkbar an einem Deckenförderer (3) gelagert ist und daß der Schwenkarm (7) mit zwei Gewichtsausgleichseinrichtungen (16, 18) versehen ist, von denen eine (18) eine ständige Verbindung mit dem Schwenkarm (7) hat und die andere (16) mittels einer Kuppeleinrichtung (20, 28) mit dem Schwenkarm (7) verbindbar ist.

2. Vorrichtung nach Anspruch 1, dadurch gekennzeichnet, daß die Gewichtsausgleichseinrichtungen (16, 18) Gasdruckfedern (21, 23) sind.

3. Vorrichtung nach den Ansprüchen 1 oder 2, dadurch gekennzeichnet, daß die Kuppeleinrichtung ein an einem Teil der Gasdruckfeder (23) befestigtes Druckstück (24) ist, welches zum Gewichtsausgleich gegen einen Hebelarm (17) des Schwenkarmes (7) anliegt und mittels der Kuppeleinrichtung in einer sich bei ausgeschwenktem Schwenkarm (7) ergebenden Endstellung blockierbar ist.

4. Vorrichtung nach einem oder mehreren der vorangehenden Ansprüche, dadurch gekennzeichnet, daß das Druckstück (24) zwischen zwei Leisten (26, 27) in einer Geradführung (25) verschieblich angeordnet ist.

5. Vorrichtung nach einem oder mehreren der vorangehenden Ansprüche, dadurch gekennzeichnet, daß die Geradführung (25) zum Blockieren des Druckstückes (24) eine Rastmulde (28) aufweist.

6. Vorrichtung nach einem oder mehreren der vorangehenden Ansprüche, dadurch gekennzeichnet, daß im Bereich der Rastmulde (28) unterhalb des Druckstückes (24) ein Schwenkhebel (20) zum Herausheben des Druckstückes (24) aus der Rastmulde (28) vorgesehen ist.

7. Vorrichtung nach einem oder mehreren der vorangehenden Ansprüche, dadurch gekennzeichnet, daß der Schwenkhebel (20) ein zweiarmiger Hebel ist, welcher an seinem kürzeren Hebelarm unterhalb des Druckstückes (24) einen gegen das Druckstück (24) bewegbaren Stößel (32) zum Anheben des Druckstückes (24) hat.

8. Vorrichtung nach einem oder mehreren der vorangehenden Ansprüche, dadurch gekennzeichnet, daß insgesamt zwei zu einem Rahmen zusammengefaßte Schwenkarme (7) vorgesehen sind.

9. Vorrichtung nach einem oder mehreren der vorangehenden Ansprüche, dadurch gekennzeichnet, daß die Schwenkarme (7) mittels einer gemeinsamen Achse (8) an einem Grundrahmen (6) schwenkbar gelagert sind, welcher an zwei auf einer Deckenschiene (2) verfahrbaren Förderwagen (4, 5) befestigt ist.

10. Vorrichtung nach einem oder mehreren der vorangehenden Ansprüche, dadurch gekennzeichnet, daß die Schwenkarme (7) durch zwei manuell betätigbare Doppelraster in hochgeschwenkter Stellung arretierbar sind.

**Revendications**

1. Dispositif de transport, montage et démontage du capot de moteur d'un véhicule automobile, caractérisé par le fait que le dispositif comporte, articulé sur au moins un bras pivotant (7), un cadre de maintien (11) pour recevoir le capot (12), par le fait que l'autre extrémité du bras pivotant (7) est montée à pivotement sur un transporteur suspendu (3), et par le fait que le bras pivotant (7) est muni de deux dispositifs de compensation de poids (16, 18), l'un (18) d'eux ayant une liaison permanente avec le bras pivotant (7) et l'autre (16) pouvant être lié au bras pivotant (7) au moyen d'un dispositif de couplage (20, 28).

2. Dispositif selon revendication 1, caractérisé par le fait que les dispositifs de compensation de poids (16, 18) sont des ressorts pneumatiques (21, 23).

3. Dispositif selon les revendications 1 ou 2, caractérisé par le fait que le dispositif de couplage est une pièce de poussée (24) fixée à une partie du ressort pneumatique (23), cette pièce s'appliquant, pour la compensation de poids, contre un bras de levier (17) du bras pivotant (7) et pouvant, au moyen du dispositif de couplage, être bloquée à une position finale se présentant lorsque le bras pivotant (7) est déployé.

4. Dispositif selon une ou plusieurs des revendications précédentes, caractérisé par le fait que la pièce de poussée (24) est agencée avec possibilité de déplacement en translation dans un guide rectiligne (25) entre deux rails (26, 27).

5. Dispositif selon une ou plusieurs des revendications précédentes, caractérisé par le fait que le guide rectiligne (25) présente une échancrure d'enclenchement (28) pour le blocage de la pièce de poussée (24).

6. Dispositif selon une ou plusieurs des revendications précédentes, caractérisé par le fait qu'il est prévu, dans la région de l'échancrure d'enclenchement (28), en dessous de la pièce de poussée (24), un levier pivotant (20) pour soulever la pièce de poussée (24) hors de l'échancrure d'enclenchement (28).

7. Dispositif selon l'une ou plusieurs des revendications précédentes, caractérisé par le fait que le levier pivotant (20) est un levier à deux bras qui possède, sur son bras le plus court, en dessous de la pièce de poussée (24), un poussoir (32) mobile vers la pièce de poussée (24), pour soulever celle-ci (24).

8. Dispositif selon une ou plusieurs des revendications précédentes, caractérisé par le fait qu'il est prévu au total deux bras pivotants (7) réunis en un cadre.

9. Dispositif selon une ou plusieurs des revendications précédentes, caractérisé par le fait qu'au moyen d'un axe commun (8) les bras pivotants (7) sont montés à pivotement sur un cadre de base (6) qui est fixé sur deux chariots transporteurs (4, 5) mobiles sur un rail suspendu (2).

10. Dispositif selon une ou plusieurs des revendications précédentes, caractérisé par le fait que les bras pivotants (7) peuvent être arrêtés en position relevöe par deux doubles verrous d'enclenchement actionnables manuellement.

**Claims**

1. Device for transporting and for the assembly and disassembly of a bonnet of a motor vehicle, characterised in that the device has a holding frame (11) for receiving the bonnet (12) connected to at least one swivel arm (7), that the other end of the swivel arm (7) is pivotably mounted on an overhead conveyor (3) and that the swivel arm (7) is provided with two weight counter-balancing devices (16, 18), of which one (18) is permanently connected with the swivel arm (7) and the other (16) can be connected to the swivel arm (7) by means of a coupling device (20, 28).

2. Device according to claim 1, characterised in that the weight counter-balancing devices (16, 18) are gas pressure springs (21, 23).

3. Device according to claims 1 or 2, characterised in that the coupling device is a pressure member (24) secured to a part of the gas pressure spring (23) which for weight counterbalancing rests against a lever arm (17) of the swivel arm (7) and through the coupling device can be blocked in an end position when the swivel arm (7) is fully extended.

4. Device according to one or more of the preceding claims, characterised in that the pressure member (24) is displaceably arranged in a straight guide (25) between two strips (26, 27).

5. Device according to one or more of the preceding claims, characterised in that the straight guide (25) has a stop cavity (28) for blocking the pressure member (24).

6. Device according to one or more of the preceding claims, characterised in that a swivel lever (20) for lifting the pressure member (24) out of the stop cavity (28) is provided beneath the pressure member (24) in the region of the stop cavity.

7. Device according to one or more of the preceding claims, characterised in that the swivel lever (20) is a two-armed lever which on its shorter lever arm beneath the pressure member (24) has a push rod (32) movable against the pressure member (24) for raising the pressure member (24).

8. Device according to one or more of the preceding claims, characterised in that altogether two swivel arms (7) are provided to form one frame.

9. Device according to one or more of the preceding claims, characterised in that through a common axle (8) the swivel arms (7) are pivotably mounted on a base frame (6) which is secured to two conveying carriages (4, 5) movable along an overhead rail (2).

10. Device according to one or more of the preceding claims, characterised in that the swivel arms (7) can be locked in the raised position by two manually operated double locking means.

Fig.1

# Fig.2

Fig.3

18

21

6

22

7

8

EP 0 276 415 B1

Fig. 4

EP 0 276 415 B1

Fig.5

EP 0 276 415 B1